# EUROPÄISCHE PATENTSCHRIFT

(11) **EP 1 683 721 B1**
(45) Veröffentlichungstag und Bekanntmachung des Hinweises auf die Patenterteilung: **23.04.2008**
(21) Anmeldenummer: 06001011.3
(22) Anmeldetag: 18.01.2006
(51) Int. Cl.: B64F 5/00

(54) **Längsnaht-Strukturmontage von Flugzeugrümpfen**
Structural mounting of longitudinal lap joints of aircraft fuselages
Montage structurel de joints longitudinaux de fuselages d'aéronefs

(30) Priorität: 19.01.2005 DE 102005002546; 19.01.2005 US 644951 P
(43) Veröffentlichungstag der Anmeldung: 26.07.2006
(73) Patentinhaber: Airbus Deutschland GmbH, 21129 Hamburg (DE)
(72) Erfinder: Schüler, Harald, 21129 Hamburg (DE)
(74) Vertreter: Maiwald Patentanwalts GmbH

(56) Entgegenhaltungen:
- EP-A- 0 917 920
- DE-A1- 3 302 618
- US-A- 5 468 099
- US-A- 5 555 616
- US-A- 6 098 260
- US-A1- 2003 116 331
- US-B1- 6 210 084
- US-B1- 6 413 022

## Beschreibung

Die vorliegende Erfindung betrifft die Längsnaht-Strukturmontage von Flugzeugrümpfen. Insbesondere betrifft die vorliegende Erfindung eine Spantklemmvorrichtung zur Längsnaht-Strukturmontage eines Flugzeugrumpfes, ein Verfahren zur Längsnaht-Strukturmontage und die Verwendung einer entsprechenden Spantklemmvorrichtung zur Längsnaht-Strukturmontage.

Bei Längsnaht-Strukturmontagen werden die Schalen im Überlappungsbereich über Auffädelbohrungen zusammengefahren und fixiert. Anschließend werden die Vorbohrungen übertragen. Nach dem Bohren werden die Schalen auseinandergefahren und die Bohrungen entgratet. Anschließend wird Dichtmittel aufgetragen und die Schalen erneut zusammengefahren und geheftet.

Die Bohrungen werden dann auf Endmaß aufgebohrt und anschließend gesenkt und genietet. Hierfür ist ein hoher Arbeitsaufwand durch Setzen von Popnieten und durch Vorbohren, Aufbohren und Senken erforderlich.

Alternativ zu diesem manuellen Verfahren der Längsnaht-Strukturmontage kann ein halbautomatisches Verfahren angewendet werden. Hierbei werden die Schalen statt dem Heften mit Schablonen verschraubt. Auf den Schienen der Bohrschablone wird die sog. LBOS-Bohreinheit (Längsnaht - Bohrsystem ,manuelle positionierte automatische Bohrvorschubseinheit mit Schmiermitteldosierung und Absaugung für AL / AL und AL / Titan, mit einer Fixierung in einer Bohrschablone mit Schienenführung in x und y) montiert und alle restlichen Bohrungen auf Endmaß automatisch gebohrt.

Anschließend werden die Schalen genietet. Für die Bereitstellung von Bohrschablonen und Bohrsystem ist ein hoher Aufwand erforderlich.

Es ist eine Aufgabe der vorliegenden Erfindung, eine verbesserte Längsnaht-Strukturmontage von Flugzeugrümpfen bereitzustellen.

Gemäß einem Ausführungsbeispiel der vorliegenden Erfindung wird die obige Aufgabe mittels einer Spantklemmvorrichtung zur Längsnaht-Strukturmontage eines Flugzeugrumpfes gelöst, die Spantklemmvorrichtung umfassend Befestigungsmittel zum Befestigen der Spantklemmvorrichtung an einen ersten Spant des Flugzeugrumpfes und Fixierungsmittel zum kraftschlüssigen und reibschlüssigen Fixieren einer ersten Schale und einer zweiten Schale des Flugzeugrumpfes derart, dass eine erste Gruppe von ersten Bohrungen in der ersten Schale spanfrei erzeugbar ist, wobei das Fixierungselement einen Druckstempel umfasst, und dieser zur Fixierung der ersten und der zweiten Schale gegen die erste und zweite Schale pressbar ist.

Durch die erfindungsgemäße Spantklemmvorrichtung wird ein kostengünstiges Montagesystem angegeben, welches eine Längsnaht-Strukturmontage ermöglicht, ohne dass die erste Schale und die zweite Schale zum Entgraten der ersten Gruppe von ersten Bohrungen auseinandergefahren werden müssen. Vorteilhafterweise werden die ersten und zweiten Schalen durch die Spantklemmvorrichtung derart aneinander fixiert, dass saubere erste Bohrungen erzeugt werden können, welche nicht an den Innenseiten der ersten und zweiten Schalen, an denen die ersten und zweiten Schalen aufeinanderliegen, entgratet werden müssen.

Eine zwischenzeitige Demontage der Bauteile kann somit entfallen.

Gemäß einem weiteren Ausführungsbeispiel der vorliegenden Erfindung umfasst das Befestigungsmittel einen ersten hydraulischen oder pneumatischen Klemmzylinder und einen Formblock, wobei ein Bereich des ersten Spants durch Zusammenwirken des ersten hydraulischen oder pneumatischen Klemmzylinders mit dem Formblock einquetschbar ist, so dass die Spantklemmvorrichtung an dem ersten Spant befestigbar ist.

Vorteilhafterweise stellt der erste hydraulische oder pneumatische Klemmzylinder eine zuverlässige, preiswerte und extern ansteuerbare Art der Befestigung der Spantklemmvorrichtung an dem ersten Spant bereit.

Gemäß einem weiteren Ausführungsbeispiel der vorliegenden Erfindung umfasst das Fixierungsmittel einen zweiten hydraulischen oder pneumatischen Klemmzylinder und einen Druckstempel, wobei der Druckstempel von dem zweiten hydraulischen oder pneumatischen Klemmzylinder zur Fixierung der ersten und der zweiten Schale gegen die erste und zweite Schale pressbar ist und wobei die erste Gruppe an ersten Bohrungen von einem Crackstopper als Schablone übertragen wird.

Vorteilhafterweise sind durch die Bereitstellung eines ersten und zweiten Klemmzylinders die Befestigung der Spantklemmvorrichtung an dem ersten Spant und der Anpressdruck des Druckstempels an die ersten und zweiten Schalen getrennt voneinander regelbar.

Gemäß einem weiteren Ausführungsbeispiel der vorliegenden Erfindung ist das Fixierungsmittel weiterhin zum Fixieren einer Außenbohrschablone an dem Druckstempel über die erste Gruppe von ersten Bohrungen ausgeführt, so dass nun eine zweite Gruppe von zweiten Bohrungen in der ersten und der zweiten Schale in einem Überlappungsbereich der ersten und zweiten Schale erzeugbar ist.

Durch das Fixieren der Außenbohrschablone, beispielsweise im Crackstopperbereich, ist ein spanfreies Bohren auch in harte Materialien, wie beispielsweise Titan, sichergestellt. Die Fixierung kann beispielsweise über Schrauben oder Nieten erfolgen.

Weiterhin kann, gemäß einem weiteren Ausführungsbeispiel der vorliegenden Erfindung, die Spantklemmvorrichtung derart an dem ersten Spant befestigt werden und die erste und zweite Schale fixieren, dass eine kraftschlüssige und reibschlüssige Verbindung zwischen einem ersten Spantende des ersten Spants, einem zweiten Spantende eines zweiten Spants, der ersten Schale und der zweiten Schale entsteht.

Somit können lose Spantenden schnell und einfach relativ zueinander und relativ zu den Schalen fixiert werden.

Gemäß einem weiteren Ausführungsbeispiel der vorliegenden Erfindung umfasst die Spantklemmvorrichtung weiterhin eine Druckmesseinrichtung zur Messung des von der Spantklemmvorrichtung auf die erste und zweite Schale ausgeübten Drucks.

Vorteilhafterweise kann somit der ausgeübte Druck überwacht und entsprechend eingestellt werden.

Gemäß einem weiteren Ausführungsbeispiel der vorliegenden Erfindung wird ein Verfahren zur Längsnaht-Strukturmontage eines Flugzeugrumpfes mit einer Spantklemmvorrichtung angegeben. Hierbei wird die Spantklemmvorrichtung an einem ersten Spant mit dem Befestigungsmittel befestigt und eine erste Schale an einer zweiten Schale des Flugzeugrumpfes mit dem Fixierungsmittel kraftschlüssig und reibschlüssig fixiert. Weiterhin wird eine erste Gruppe von ersten Bohrungen in der ersten Schale erzeugt.

Gemäß diesem Ausführungsbeispiel der vorliegenden Erfindung wird ein einfaches und schnelles Verfahren angegeben, bei dem Schalen eines Flugzeugrumpfes im Rahmen einer Montage miteinander verbunden werden können, ohne dass sie während der Montage zeitweilig auseinandergefahren werden müssen, beispielsweise um Bohrungen zu entgraten.

Gemäß einem weiteren Ausführungsbeispiel der vorliegenden Erfindung werden Dichtmittel auf die erste Schale und die zweite Schale aufgebracht und die Schalen über eine oder mehrere Auffädelbohrungen in einem Überlappungsbereich der ersten und zweiten Schale vor dem Befestigen der Spantklemmvorrichtung fixiert. Nach spannungsfreiem Erzeugen der ersten Gruppe von ersten Bohrungen in der ersten Schale, welche die äußere Schale ist, wird eine Außenbohrschablone an einem Druckstempel der Spantklemmvorrichtung fixiert. Hierzu dient die erste Gruppe von ersten Bohrungen. Weiterhin umfasst das Verfahren die Erzeugung einer zweiten Gruppe von zweiten Bohrungen in der ersten und der zweiten Schale in dem Überlappungsbereich der beiden Schalen, wonach die beiden Schalen miteinander durch die zweiten Bohrungen hindurch vernietet werden. Die erste Gruppe an ersten Bohrungen wird hierbei von einem Crackstopper, der als Schablone dient, übertragen.

Weitere Aufgaben, Ausführungsformen und Vorteile der Erfindung ergeben sich aus den Unteransprüchen und dem nebengeordneten Verwendungsanspruch.

Im Folgenden wird die Erfindung anhand von Ausführungsbeispielen unter Bezugnahme auf die Zeichnungen näher beschrieben.

Fig. 1 zeigt eine schematische Querschnittsdarstellung einer Spantklemmvorrichtung entlang einer ersten Schnittebene gemäß einem Ausführungsbeispiel der vorliegenden Erfindung.

Fig. 2 zeigt eine weitere schematische Querschnittsdarstellung einer Spantklemmvorrichtung entlang einer zweiten Schnittebene gemäß einem Ausführungsbeispiel der vorliegenden Erfindung.

Fig. 3 zeigt eine schematische Darstellung der Spantklemmvorrichtung der Fig. 2 mit Außenbohrschablone und Crackstopperverschraubung.

Fig. 4 zeigt eine schematische Darstellung der Außenbohrschablone von Fig. 3 gemäß eines Ausführungsbeispiels der vorliegenden Erfindung.

Fig. 5 zeigt eine schematische Darstellung der Längsnahtbereiche zwischen den Spanten.

In der folgenden Figurenbeschreibung werden für die gleichen oder ähnlichen Elemente die gleichen Bezugsziffern verwendet.

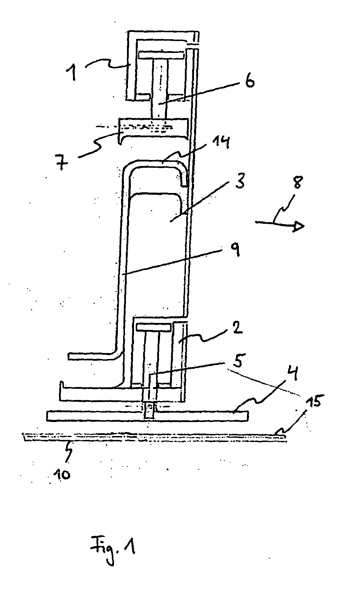

Fig. 1 zeigt eine schematische Querschnittsdarstellung einer Spantklemmvorrichtung zur Längsnaht-Strukturmontage eines Flugzeugrumpfes entlang einer ersten Schnittebene gemäß eines Ausführungsbeispiels der vorliegenden Erfindung. Wie in Fig. 1 zu erkennen, weist die Spantklemmvorrichtung einen oberen Klemmzylinder 1, einen unteren Klemmzylinder 2 und einen Formblock 3 auf. Das neue Spantklemmsystem ist ein kostengünstiges Montagesystem, bei welchem eine zeitweilige Demontage oder ein zeitweiliges Auseinanderfahren der zu montierenden Schalen nicht mehr nötig ist.

Die Flugzeuglängsachse ist durch Bezugsziffer 8 angegeben.

Der oberer Klemmzylinder 1 und der Formblock 3 werden dazu verwendet, den Spant 9 in einen oberen Bereich 14 einzuquetschen und somit die Spantklemmvorrichtung an dem oberen Bereich 14 des Spants 9 zu befestigen. Der untere Klemmzylinder 2 ist mit einem inneren Druckstempel 4 verbunden, welcher zur Fixierung einer ersten Schale 10 und einer zweiten Schale 15 gegen die erste Schale 10 und die zweite Schale 15 pressbar ist. Somit können die erste Schale 10, die zweite Schale 15 und der Spant 9 kraftschlüssig und reibschlüssig fixiert werden, so dass eine erste Gruppe von ersten Bohrungen in der ersten Schale 10 spannungsfrei erzeugbar ist. Die erste Gruppe an ersten Bohrungen wird beispielsweise von einem Crackstopper, welcher als Bohrschablone dient (also bereits Bohrschablonenlöcher in Titan aufweist), übertragen.

Der obere Klemmzylinder 1 umfasst einen oberen Kolben 6, an dem ein Klemmstempel 7 befestigt ist. Durch Betätigung des Klemmzylinders wird der Klemmstempel 7 gegen den oberen Bereich 14 des Spants 9 gedrückt und der Formblock 3 in Richtung des Klemmstempels 7 bewegt, bis eine kraftschlüssige und feste Befestigung der Spantklemmvorrichtung an dem oberen Bereich 14 des Spants 9 entstanden ist.

Der untere Klemmzylinder 2 weist einen unteren Kolben 5 auf, an dem der innere Druckstempel 4 befestigt ist. Wird der untere Klemmzylinder 2 ausgelöst, schiebt der untere Kolben 5 den inneren Druckstempel 4 gegen die beiden Schalen und fixiert sie somit kraftschlüssig und reibschlüssig, so dass nachfolgend entsprechende Bohrungen vorgenommen werden können, ohne dass Bohrspäne in den Zwischenraum zwischen den beiden Schalen gelangen. Eine nachfolgende Entgratung kann somit entfallen.

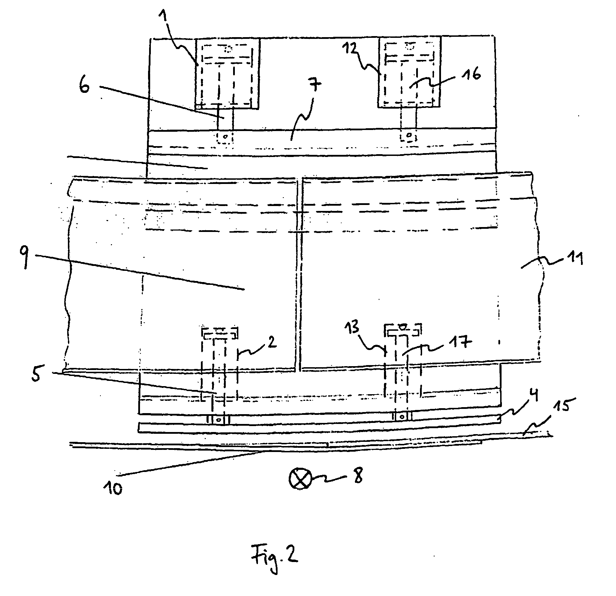

Fig. 2 zeigt eine weitere schematische Querschnittsdarstellung einer Spantklemmvorrichtung entlang einer zweiten Schnittebene gemäß einem Ausführungsbeispiel der vorliegenden Erfindung. Die in Fig. 2 dargestellte Spantklemmvorrichtung umfasst einen weiteren oberen Klemmzylinder 12 mit einem entsprechenden Kolben 16 und einen weiteren unteren Klemmzylinder 13 mit entsprechendem unteren Kolben 17. Der zweite obere Kolben 16 ist mit dem Klemmstempel 7 verbunden und der untere Kolben 17 ist mit dem inneren Druckstempel 4 verbunden. Die in Fig. 2 dargestellte Spantklemmvorrichtung kann beispielsweise an zwei benachbarten Spantenden 9, 11 befestigt werden, so dass die beiden Spantenden 9, 11 fest gegeneinander fixiert sind.

Die Flugzeuglängsachse von Fig. 2 ist durch Bezugszeichen 8 symbolisiert und verläuft senkrecht zur Bildebene.

Durch das Befestigen der Spantklemmvorrichtung an den Spantenden 9, 11 und durch das Fixieren der ersten Schale 10 und der zweiten Schale 15 (welches kraftschlüssig und reibungsfrei ist) mit Hilfe des inneren Druckstempels 4, kann nun die erste Gruppe an ersten Bohrungen in der ersten Schale 10 spannungsfrei von innen mit Hilfe des Crackstoppers als Bohrschablone erzeugt werden. Weiterhin ist eine passgenaue und stabile Fixierung der beiden Schalen 10, 15 relativ zueinander und relativ zu den beiden Spantenden 9, 11 gewährleistet.

Der Crackstopper ist beispielsweise ein geometrisch geformtes doppeltes Trapez aus etwa 1mm starkem Titanblech ausgeführt, das einen entstandenen Riss (Crack) am Rissfortschritt hindern soll.

Bei der neuen Längsnahtmontage werden die beiden Schalen 10, 15 mit Dichtmittel versehen und im Überlappungsbereich über Auffädelbohrungen zusammengefahren und fixiert. Nun werden die Spantklemmeinrichtungen über die losen Spantenden 9, 11 bewegt und die Klemmzylinder 1, 2, 12, 13 mit Druckluft versorgt und ausgelöst. Beim Auseinanderfahren der Zylinder wird eine kraft- und reibschlüssige Verbindung zwischen den losen Spantenden 9, 11 der Schalen und dem Hautfeld mit Crackstopper erreicht. Nun können von innen, beispielsweise mit Hilfe einer Hülsenbohrmaschine, mehrere (erste) Bohrungen im Crackstopper auf das äußere Hautfeld (nämlich der äußeren ersten Schale 10) spanfrei und spannungsfrei übertragen werden. Über diese (beispielsweise vier) Bohrungen kann eine Außenbohrschablone (nicht gezeigt in Fig. 2) mit dem inneren Druckstempel 4 verschraubt oder anderweitig verbunden werden. Durch das kraftschlüssige Verbinden der Außenbohrschablone mit dem inneren Druckstempel im Bereich des Crackstoppers ist ein spanfreies Bohren im Titan sichergestellt. Jetzt kann eine zweite Gruppe von zweiten Bohrungen in der ersten und der zweiten Schale 10, 15 in dem Überlappungsbereich der beiden Schalen 10, 15 entweder manuell oder beispielsweise auch mit einem automatischen Bohrsystem, wie einem sog. Bohrvorschubseinheit (BVE), auf Endmaß erzeugt werden.

Mit der erfindungsgemäßen Spantklemmvorrichtung können somit spanfreie Passbohrungen in Aluminium und Titan, also auch im Crackstopperbereich, erzeugt werden.

Anschließend können die Schalen miteinander vernietet werden.

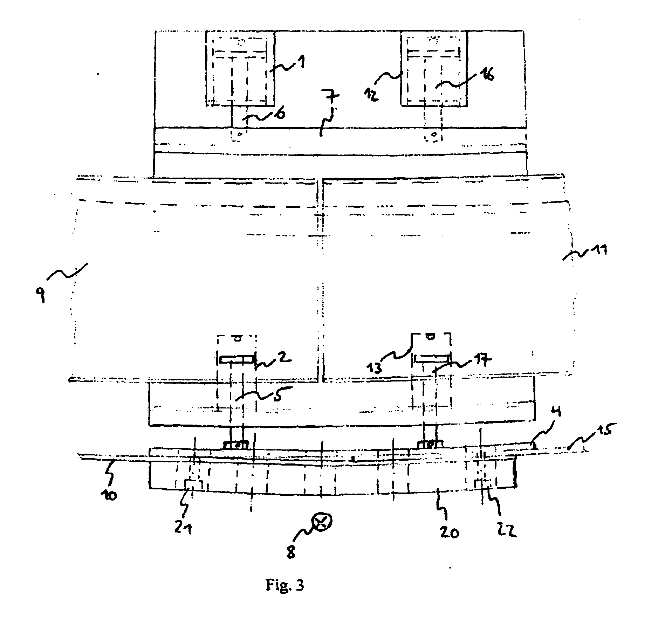

Fig. 3 zeigt eine schematische Darstellung der Spantklemmvorrichtung der Fig. 2 mit Außenbohrschablone 20 und Crackstopperverschraubung 21, 22.

Es können somit spanfreie Endmaß-Passbohrungen in Aluminium und harten Materialien, wie beispielsweise Titan, mit geringstmöglichem Vorrichtungsaufwand hergestellt werden. Um eine Verunreinigung der Kontaktflächen zwischen erster Schale 10 und zweiter Schale 15 im Überlappungsbereich durch das Bohren (beispielsweise mit Bohrspänen oder Gleitmittel oder dergleichen) zu vermeiden, werden die beiden Schalen beispielsweise über eine Außenbohrschablone 20 mit dem inneren Druckstempel 4 verschraubt oder vernietet. Somit können auch höhere Bohrkräfte von 250 Newton oder mehr eingesetzt werden, ohne dass die Bauteile gegeneinander bewegt werden.

Weiterhin kann eine Druckmesseinrichtung (nicht gezeigt in Fig. 2) zur Messung des von der Spantklemmvorrichtung auf die erste und zweite Schale 10, 15 ausgeübten Drucks vorgesehen sein. Insbesondere kann diese Druckmesseinrichtung mit einem Steuer- oder Regelungsgerät verbunden sein, welches die Klemmzylinder 1, 2, 12, 13 steuert oder regelt. Somit kann beispielsweise gewährleistet werden, dass stets eine vorgegebene Anpresskraft auf den Spantbereich 14 und insbesondere auf die Schalen 10, 15 einwirkt.

Weiterhin ist zu beachten, dass die Quetschvorrichtung (bestehend aus oberem Klemmzylinder 1, oberem Kolben 6 und Klemmstempel 7) nicht zwingend in Form eines hydraulischen oder pneumatischen Klemmzylinders ausgeführt sein muss, sondern vielmehr auch in Form einer pneumatischen Vorrichtung oder aber auch in Form einer rein mechanischen Vorrichtung, welche beispielsweise ein Gewinde umfasst, welches durch einen Elektromotor oder aber auch manuell bedienbar ist, ausgeführt sein kann. Dasselbe gilt für die übrigen Klemmzylinder und dazugehörigen Kolben, Klemmstempel und Druckstempel.

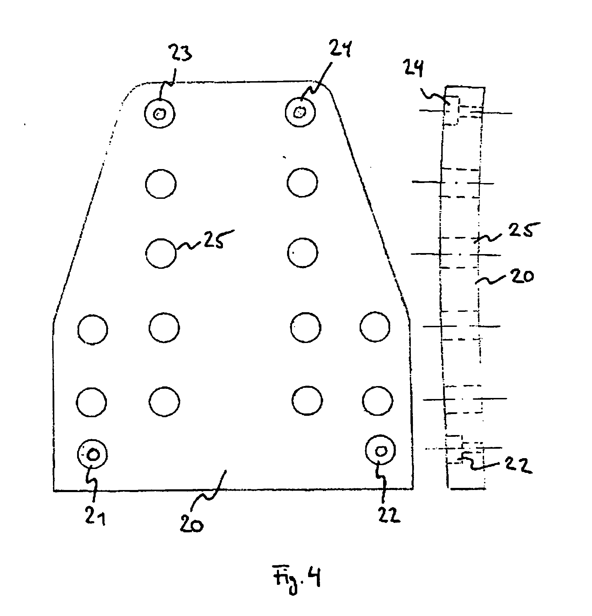

Fig. 4 zeigt eine schematische Darstellung der Außenbohrschablone 20 von Fig. 3 mit ersten Bohrlöchern 21, 22, 23, 24 und zweiten Bohrlöchern (wie beispielsweise Bohrloch 25) gemäß eines Ausführungsbeispiels der vorliegenden Erfindung. Die Außenbohrschablone 20 ist in einer Draufsicht und in einer Seitenansicht gezeigt.

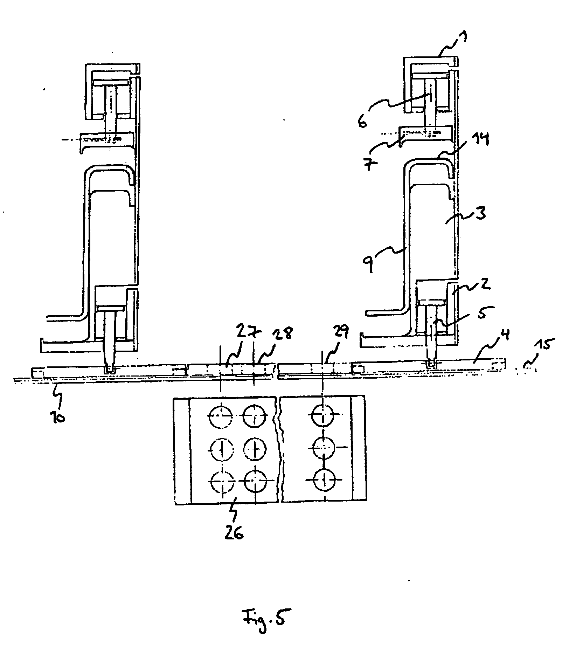

Fig. 5 zeigt eine schematische Darstellung der Längsnahtbereiche zwischen den Spanten gemäß einer bevorzugten Ausführungsform de vorliegenden Erfindung.

Die Längsnahtbereiche Aluminium/Aluminium zwischen den Spanten können mit einer einfachen Innenschablone an der Spantklemmeinrichtung fixiert werden, um den Überlappungsbereich und einen Stringer zu unterstützen. Ebenso können die Aluminium/Aluminium-Bereiche ohne Innenschablone nur über mehrere Auffädelbohrungen 27, 28, 29 mit dem Stringer fixiert werden. Beispielsweise kann eine einfache Blechschablone 26 von außen über diese Bohrungen verschraubt werden.

Die Erfindung beschränkt sich in ihrer Ausführung nicht auf die in den Figuren dargestellten bevorzugten Ausführungsformen. Vielmehr ist eine Vielzahl von Varianten denkbar, welche von der dargestellten Lösung und dem erfindungsgemäßen Prinzip auch bei grundsätzlich anders gearteten Ausführungsformen Gebrauch macht.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Spantklemmvorrichtung zur Längsnaht-Strukturmontage eines Flugzeugrumpfes, die Spantklemmvorrichtung umfassend:
Befestigungsmittel (1,3,6,7) zum Befestigen der Spantklemmvorrichtung an einen ersten Spant (9) des Flugzeugrumpfes;
Fixierungsmittel (2,4,5) zum kraftschlüssigen und reibschlüssigen Fixieren einer ersten Schale (10) und einer zweiten Schale (15) des Flugzeugrumpfes derart, dass eine erste Gruppe von ersten Bohrungen in der ersten Schale (10) spanfrei erzeugbar ist;
wobei das Fixierungsmittel (2,4,5) eine Druckstempel (4) umfasst: und
wobei der Druckstempel (4) zur Fixierung der ersten (10) und der zweiten (15) Schale gegen die erste (19) und zweite (15) Schale pressbar ist.

2. Spantklemmvorrichtung nach Anspruch 1,
wobei das Befestigungsmittel (1,3,6,7) einen ersten hydraulischen oder pneumatischen Klemmzylinder (1) und einen Formblock (3) umfasst; und
wobei ein Bereich des ersten Spants (9) durch Zusammenwirken des ersten hydraulischen oder pneumatischen Klemmzylinders (1) mit dem Formblock (3) einquetschbar ist, so dass die Spantklemmvorrichtung an dem ersten Spant (9) befestigbar ist.

3. Spantklemmvorrichtung nach Anspruch 1 oder 2,
wobei das Fixierungsmittel (2,4,5) einen zweiten hydraulischen oder pneumatischen Klemmzylinder (2) umfasst;
wobei der Druckstempel (4) von dem zweiten hydraulischen oder pneumatischen Klemmzylinder (2) zur Fixierung der ersten (10) und der zweiten (15) Schale gegen die erste (10) und zweite (15) Schale pressbar ist; und
wobei die erste Gruppe an ersten Bohrungen von einem Crackstopper als Schablone übertragen wird.

4. Spantklemmvorrichtung nach einem der vorhergehenden Ansprüche,
wobei das Fixierungsmittel (2,4,5) weiterhin zum Fixieren einer Außenbohrschablone (20) an dem Duckstempel (4) über die erste Gruppe von ersten Bohrungen ausgeführt ist, so dass nun eine zweite Gruppe von zweiten Bohrungen in der ersten (10) und der zweiten (15) Schale in einem Überlappungsbereich der ersten (10) und zweiten (15) Schale erzeugbar ist.

5. Spantklemmvorrichtung nach einem der vorhergehenden Ansprüche,
wobei durch das Befestigen der Spantklemmvorrichtung und dem Fixieren der ersten (10) und der zweiten (15) Schale eine kraftschlüssige und reibschlüssige Verbindung zwischen einem ersten Spantende des ersten Spants (9) einem zweiten Spantende eines zweiten Spants (11), der ersten Schale (10) und der zweiten Schale (15) entsteht.

6. Spantklemmvorrichtung nach einem der vorhergehenden Ansprüche, weiterhin umfassend eine Druckmesseinrichtung zur Messung des von der Spantklemmvorrichtung auf die erste (10) und zweite (15) Schale ausgeübten Drucks.

7. Verfahren zur Längsnaht-Strukturmontage eines Flugzeugrumpfes mit einer Spantklemmvorrichtung nach einem der Ansprüche 1 bis 6, umfassend die folgenden Schritte:
Befestigung der Spantklemmvorrichtung an einem erstem Spant (9) mit dem Befestigungsmittel (1,3,6,7);
kraftschlüssiges und reibschlüssiges Fixieren einer ersten Schale (10) und einer zweiten Schale (15) des Flugzeugrumpfes mit dem Fixierungsmittel (2,4,5) und
span freies Erzeugen von einer ersten Gruppe von ersten Bohrungen in der ersten Schale (10).

8. Verfahren nach Anspruch 7, weiterhin umfassend die folgenden Schritte:
Aufbringen eines Dichtmittels auf die erste Schale (10) und auf die zweite Schale (15);
Fixieren der ersten Schale an der zweiten Schale über eine oder mehrere Auffädelbohrungen in einem Überlappungsbereich der ersten und zweiten Schale vor dem Befestigen der Spantklemmvorrichtung, wobei die erste Schale (10) die äußere Schale ist;
Fixieren einer Außenbohrschablone (20) an einem Duckstempel (4) der Spantklemmvorrichtung über die erste Gruppe von ersten Bohrungen;
Erzeugen einer zweiten Gruppe von zweiten Bohrungen in der ersten (10) und der zweiten (15) Schale in dem Überlappungsbereich der ersten (10) und zweiten (15) Schale;
Vernieten der ersten Schale (10) und der zweiten Schale (15) durch die zweiten Bohrungen;
wobei die erste Gruppe an ersten Bohrungen von einem Crackstopper als Schablone übertragen wird.

9. Verfahren nach Anspruch 7 oder 8,
wobei das Befestigen der Spantklemmvorrichtung über einen ersten hydraulischen oder pneumatischen Klemmzylinder (1) erfolgt und wobei das Fixieren der ersten (10) und der zweiten (15) Schale über einen zweiten hydraulischen oder pneumatischen Klemmzylinder (2) erfolgt; wobei der erste hydraulische oder pneumatische Klemmzylinder (1) in Zusammenwirkung mit einem Formblock (3) einen Bereich (14) des ersten Spants (9) einquetscht, so dass die Spantklemmvorrichtung an dem ersten Spant (9) befestigt ist;
wobei der zweite hydraulische oder pneumatische Klemmzylinder (2) den Druckstempel (4) gegen die erste (10) oder die zweite (15) Schale presst; und
wobei durch das Anbringen der Spantklemmvorrichtung eine kraftschlüssige und reibschlüssige Verbindung zwischen einem ersten Spantende des ersten Spants (9), einem zweiten Spantende eines zweiten Spants (11), der ersten Schale (10) und der zweiten Schale (15) entsteht.

10. Verwendung einer Spantklemmvorrichtung nach einem der Ansprüche 1 bis 6 zur Längsnaht-Strukturmontage eines Flugzeugrumpfes.

## Claims

1. Frame clamping device for longitudinal seam structural assembly of an aircraft fuselage, the frame clamping device comprising:
attachment means (1, 3, 6, 7) for attaching the frame clamping device to a first frame (9) of the aircraft fuselage;
fixing means (2, 4, 5) for the non-positive and frictionally-engaged fixing of a first shell (10) and a second shell (15) of the aircraft fuselage in such a way that a first group of first drill holes can be produced in the first shell (10) in a stress free manner;
wherein the fixing means (2, 4, 5) comprises a pressure stamp (4); and
whereby the pressure stamp (4) can be pressed against the first (10) and second (15) shell for fixing the first (10) and second (15) shell.

2. Frame clamping device according to claim 1,
wherein the attachment means (1, 3, 6, 7) comprises a first hydraulic or pneumatic clamping cylinder (1) and a form block (3); and
wherein a region of the first frame (9) can be squeezed by the cooperation of the first hydraulic or pneumatic clamping cylinder (1) with the form block (2) so that the frame clamping device can be attached to the first frame (9).

3. Frame clamping device according to claim 1 or claim 2,
wherein the fixing means (2, 4, 5) comprises a second hydraulic or pneumatic clamping cylinder (2);
wherein the pressure stamp (4) can be pressed by the second hydraulic or pneumatic clamping cylinder (2) against the first (10) and the second (15) shell for fixing the first (10) and the second (15) shell; and
wherein the first group of first drill holes is transferred by a crack stopper as a template.

4. Frame clamping device according to any one of the preceding claims.
wherein the fixing means (2, 4,5) is further designed to fix an external drilling template (20) to the pressure stamp (4) via the first group of first drill holes so that now a second group of second drill holes can be produced in the first and the second shell in an overlap region of the first (10) and second (15) shell.

5. Frame clamping device according to any one of the preceding claims,
wherein the attachment of the frame clamping device and the fixing of the first (10) and the second (15) shell establishes a non-positive and frictionally-engaged connection between a first frame end of the first frame (9) and a second frame end of a second frame (11) of the first shell (10) and the second shell (15).

6. Frame clamping device according to any one of the preceding claims further comprising a pressure measuring device for measuring the pressure exerted by the frame clamping device on the first shell (10) and the second shell (15).

7. Method for the longitudinal seam structural assembly of an aircraft fuselage with a frame clamping device according to any one of claims 1 to 6 comprising the following steps:
attachment of the frame clamping device to a first frame (9) with the attachment means (1, 3, 6, 7);
non-positive and frictionally-engaged fixing of a first shell (10) and a second shell (15) of the aircraft fuselage with the fixing means (1, 2, 4, 5)
production of a first group of first drill holes in the first shell (10) in a stress-free manner.

8. Method according to claim 7 further comprising the following steps
application of a sealing means to the first shell (10) and the second shell (15);
fixing of the first shell to the second shell via one or more lining-up drill holes in an overlap region of the first shell and second shell before the attachment of frame clamping device, wherein the first shell (10) is the outer shell;
fixing of an external drilling template (20) to a pressure stamp (4) of the frame clamping device via the first group of first drill holes;
producing a second group of second drill holes in the first (10) and the second (15) shell in the overlap area of the first (10) and the second (15) shell;
riveting the first shell (10) and the second shell (15) through the second drill holes;
wherein the first group of first drill holes is transferred by a crack stopper as a template.

9. Method according to claim 7 or claim 8
wherein the attachment of the frame clamping device takes place by means of a first hydraulic or pneumatic clamping cylinder (1) and whereby the fixing of the first (10) and the second (15) shell takes place by means of a second hydraulic or pneumatic clamping cylinder (2); whereby the first hydraulic or pneumatic clamping cylinder (1) cooperates with a form block (3) to squeeze a region (14) of the first frame (9) so that the frame clamping device is attached to the first frame (9);
wherein the second hydraulic or pneumatic clamping cylinder (2) presses the pressure stamp (4) against the first (10) or the second (15) shell; and
wherein the application of the frame clamping device causes a non-positive and frictionally-engaged connection to form between a first frame end of the first frame (9), a second frame end of a second frame (11), the first shell (10) and the second shell (15).

10. Use of a frame clamping device according to any one of claims 1 to 6 for the longitudinal seam structural assembly of an aircraft fuselage.

## Revendications

1. Dispositif de serrage de couple destiné au montage structurel de joints longitudinaux d'un fuselage d'avion, le dispositif serrage de couple comprenant :
des moyens de fixation (1, 3, 6, 7) destinés à fixer le dispositif de serrage de couple à un premier couple (9) du fuselage d'avion ;
des moyens de fixation (2, 4, 5) destinés à fixer par conjugaison de forces et par friction une première coque (10) et une deuxième coque (15) du fuselage d'avion de telle façon qu'un premier groupe de premiers perçages peut être réalisé sans alésage dans la première coque (10) ;
le moyen de fixation (2, 4, 5) comprenant un tampon de pression (4) ; et
le tampon de pression (4) pouvant être pressé contre la première coque (10) et la deuxième coque (15) pour fixer la première coque (10) et la deuxième coque (15).

2. Dispositif de serrage de couple selon la revendication 1,
dans lequel le moyen de fixation (1, 3, 6, 7) comprend un premier vérin de serrage (1) hydraulique ou pneumatique et un bloc formé (3) ; et
dans lequel une zone du premier couple (9) peut être écrasée par coopération du premier vérin de serrage (1) hydraulique ou pneumatique avec le bloc formé (3) de telle façon que le dispositif de serrage de couple peut être fixé sur le premier couple (9).

3. Dispositif de serrage de couple selon la revendication 1 ou 2,
dans lequel le moyen de fixation (2, 4, 5) comprend un deuxième vérin de serrage hydraulique ou pneumatique ;
dans lequel le tampon de pression (4) peut être pressé par le deuxième vérin de serrage hydraulique ou pneumatique (2) contre la première coque (10) et la deuxième coque (15) pour fixer la première coque (10) et la deuxième coque (15) ; et
dans lequel le premier groupe de premiers perçages est reporté par l'intermédiaire un arrêteur de crique tenant lieu de gabarit.

4. Dispositif de serrage de couple selon l'une des revendications précédentes,
dans lequel le moyen de fixation (2, 4, 5) est en outre réalisé pour fixer un gabarit de perçage extérieur (20) au tampon de pression (4) par le premier groupe de premiers perçages, de sorte que désormais un deuxième groupe de deuxièmes trous peut être réalisé dans la première coque (10) et dans la deuxième coque (15) dans une zone de chevauchement de la première coque (10) et de la deuxième coque (15).

5. Dispositif de serrage de couple selon l'une des revendications précédentes,
dans lequel, du fait de la fixation du dispositif de serrage de couple et de la fixation de la première coque (10) et de la deuxième coque (15), il se crée une liaison par conjugaison de forces et par friction entre une première extrémité du premier couple (9) et une deuxième extrémité du deuxième couple (11) de la première coque (10) et de la deuxième coque (15).

6. Dispositif de serrage de couple selon l'une des revendications précédentes, comprenant par ailleurs un dispositif de mesure de pression destiné à mesurer la pression exercée par le dispositif de serrage de couple sur la première coque (10) et la deuxième coque (15).

7. Procédé de montage structurel de joints longitudinaux d'un fuselage d'avion comportant un dispositif de serrage de couple selon l'une des revendications 1 à 6, comprenant les étapes suivantes :
fixation du dispositif de serrage de couple sur un premier couple (9) avec les moyens de fixation (1, 3, 6, 7),
fixation par conjugaison de forces et par friction d'une première coque (10) et d'une deuxième coque (15) du fuselage d'avion avec le moyen de fixation (2, 4, 5) ; et
fabrication sans alésage d'un premier groupe de premiers trous dans la première coque (10).

8. Procédé selon la revendication 7, comprenant par ailleurs les étapes suivantes :
application d'un produit d'étanchéité sur la première coque (10) et sur la deuxième coque (15) ;
fixation de la première coque à la deuxième coque par un ou plusieurs trous d'enfilage dans une zone de chevauchement de la première coque et de la deuxième coque avant la direction du dispositif de serrage de couple, la première coque (10) étant la coque extérieure ;
fixation d'un gabarit de perçage extérieur (20) à un tampon de pression (4) du dispositif de serrage de couple par l'intermédiaire du premier groupe de premiers perçages ;
réalisation d'un deuxième groupe de deuxièmes perçages dans la première coque (10) et la deuxième coque (15) dans la zone de chevauchement de la première coque (10) et de la deuxième coque (15) ;
rivetage de la première coque (10) et de la deuxième coque (15) par l'intermédiaire des deuxièmes perçages ;
le premier groupe de premiers perçages étant reporté par un arrêteur de crique tenant lieu de gabarit.

9. Procédé selon la revendication 7 ou 8,
dans lequel la fixation du dispositif de serrage de couple s'effectue par l'intermédiaire d'un premier vérin de serrage (1) hydraulique ou pneumatique et dans lequel la fixation de la première coque (10) et de la deuxième coque (15) s'effectue par l'intermédiaire d'un deuxième vérin de serrage (2) hydraulique ou pneumatique ; dans lequel, en coopération avec un bloc formé (3), le première vérin de serrage (1) hydraulique ou pneumatique écrase une zone du premier couple (9) de telle façon que le dispositif de serrage de couple est fixé sur le premier couple (9) ;
dans lequel le deuxième vérin de serrage (2) hydraulique ou pneumatique presse le tampon de pression (4) contre la première coque (10) ou la deuxième coque (15) ; et
dans lequel du fait de la mise en place du dispositif de serrage de couple , il se crée une liaison par conjugaison de forces et par friction entre une première extrémité de couple du premier couple (9), une deuxième extrémité de couple d'un deuxième couple (11), de la première coque (10) et de la deuxième coque (15).

10. Utilisation d'un dispositif de serrage de couple selon l'une des revendications 1 à 6, pour le montage structurel de joints longitudinaux d'un fuselage d'avion.
